# FASCICULE DE BREVET EUROPEEN

(11) **EP 0 743 407 B1**
(45) Date de publication et mention de la délivrance du brevet: **28.06.2000**
(21) Numéro de dépôt: 96401048.2
(22) Date de dépôt: 14.05.1996
(51) Int. Cl.: E04F 15/12, C04B 26/02

(54) **Revêtement de sol coulé comportant des éléments incrustés présentant une surface décorative prédéterminée**
Gegossener Bodenbelag mit eingebetteten Elementen mit einer bestimmten dekorativen Oberfläche
Cast floor covering comprising incrustated elements with a predetermined decorative surface

(30) Priorité: 18.05.1995 FR 9505905
(43) Date de publication de la demande: 20.11.1996
(73) Titulaire: ETABLISSEMENTS BOULENGER, F-75018 Paris (FR)
(72) Inventeur: Berlemont, Jacques, 95270 Viarmes (FR); Poupon, Xavier, 75020 Paris (FR)
(74) Mandataire: Lhuillier, René

(56) Documents cités:
- EP-A- 0 086 626
- DE-A- 1 509 879
- DE-A- 1 659 362
- DE-A- 2 151 174
- DE-U- 29 500 612
- GB-A- 604 190
- GB-A- 1 213 592
- : "Avis Technique 12/92-724 CIBELASTIC", BULLETIN DES AVIS TECHNIQUES DU CENTRE SCIENTIFIQUE ET TECHNIQUE DU BATIMENT, Paris, France, 01. Mars 1993, Vol. , no. 336, pages 1 à 3

## Description

L'invention concerne les revêtements de sol coulés comprenant un décor.

Les revêtements de ce type tels que le GRANITO, obtenus à partir d'un mortier, sont habituellement constitués d'une résine souple dans laquelle sont répartis, de façon totalement aléatoire, des grains, par exemple de caoutchouc, ayant des formes aléatoires (cf. par exemple, "Avis Technique 12/92-724 Cibelastic" Bulletin des Avis Techniques du CSTB, Paris, n°336, pages 1-3). Dans ces conditions, les variations de l'aspect général des revêtements sont limitées et il n'est pas possible d'obtenir un décor contenant des motifs de forme apparente prédéterminée.

L'invention a pour but de disposer d'un revêtement de sol, sans joint, comprenant des motifs de forme apparente prédéterminée et obtenu à partir d'un mortier.

On pourrait, a priori, penser que ce but est facile à atteindre. En fait, au cours d'essais préliminaires, il a été constaté que l'obtention d'un revêtement contenant des motifs de forme apparente prédéterminée, à partir d'un mortier contenant une charge dont les éléments présentent une surface décorative ayant la forme souhaitée ou l'une des formes souhaitées pour les motifs, posait des problèmes. En particulier, bien souvent on n'obtenait pas le motif désiré parce que certains au moins des éléments de la charge ne présentaient pas leur forme décorative à l'horizontale.

Il a été trouvé que ce problème pouvait être résolu en utilisant des éléments de charge dont la plus grande dimension de la forme décorative choisie est supérieure à l'épaisseur de l'élément et dont l'épaisseur correspond sensiblement à celle du revêtement.

Selon l'un de ses aspects, l'invention a donc pour objet un revêtement de sol coulé tel que défini dans la revendication 1.

Avantageusement, le rapport de ladite dimension à ladite épaisseur est égal ou supérieur à 3.

Les éléments de charge, identiques ou différents dans leur forme décorative, leur couleur et la matière qui les constitue, peuvent être constitués notamment de caoutchouc, matière plastique, résine époxy, polyméthacrylate ou bois.

Leur épaisseur correspond sensiblement à celle du revêtement et est en général de 2 à 15 mm.

La forme décorative de chaque élément peut être figurative, c'est-à-dire être géométrique ou représenter par exemple des chiffres, des lettres, des personnages, des animaux, des symboles, des sigles etc... Elle peut également être non-figurative.

La résine peut être notamment une résine polyuréthane, notamment bi-composant, époxy ou méthacrylate.

Elle peut être translucide ou opaque et incolore ou colorée.

Avantageusement, la résine a une dureté Shore voisine de celle de la matière de charge.

Selon un autre de ses aspects, l'invention a pour objet un procédé de réalisation du revêtement de sol tel que défini dans la revendication 6.

Si le support à revêtir présente un aspect poreux, le procédé selon l'invention comporte les étapes supplémentaires, préliminaires, consistant à :
α) imprégner le support avec un prépolymère de type isocyanate solvaté dont le durcissement s'effectue par réaction des groupements isocyanate libre avec l'humidité de l'air ;
β) laisser sécher ;
γ) procéder à un ragréage au moyen d'une résine ; et
δ) laisser sécher pendant une durée adaptée au collage ultérieur de la couche de revêtement.

Le solvant utilisé pour le prépolymère de type isocyanate est, par exemple, le 1-méthoxy-2-acétoxypropane (PMA).

La résine de ragréage est de préférence à base de polyuréthane bi-composant, obtenue par polyaddition d'une résine polyhydroxylée chargée et d'un polyisocyanate de type 4,4'-diisocyanate de diphénylméthane (MDI). Elle peut être chargée, par exemple avec de la poudre de caoutchouc.

Le procédé selon l'invention comporte de préférence les étapes finales consistant à :
α') aspirer les poussières dues au ponçage ;
β') effectuer, si nécessaire, un masticage supplémentaire avec la résine utilisée à l'étape b) mais solvatée, pour boucher les quelques trous d'air éventuellement présents ;
γ') laisser sécher ;
δ') effectuer un lustrage ; et
ε') appliquer un vernis compatible avec le matériau des éléments décoratifs et de la résine, additionné avantageusement d'au moins un agent de matage et/ou d'au moins un filtre anti-UV.

Le vernis peut être constitué par exemple de polyuréthane bi-composant à base d'un composant polyhydroxylé et d'un polyisocyanate, de préférence aliphatique.

L'exemple qui suit est destiné à illustrer et mieux expliquer l'invention.

On réalise un mortier décoratif avec, par exemple, des petits cylindres en caoutchouc qui ont une surface de 254 mm² environ (diamètre de 18 mm) pour une épaisseur de 6 mm, ou des petits cubes ayant une arête de 6 mm.

Dans le cas où le support présente un aspect poreux, on procède avant tout ragréage à une imprégnation à base d'un prépolymère de type polyisocyanate solvaté, par exemple dans du 1-méthoxy-2-acétoxypropane (PMA) dont le durcissement s'effectue par réaction des groupements isocyanate libre avec l'humidité de l'air.

L'application de l'imprégnation se fait au rouleau de laine moyenne ou longue. Le séchage de cette imprégnation est de 12 à 24 h, suivant la température et l'hygrométrie.

Afin de limiter le temps de séchage, on choisit un ragréage de préférence à base de résine polyuréthane bicomposant, en réalisant une polyaddition entre une résine polyhydroxylée chargée et un polyisocyanate de type 4,4'-diisocyanate de diphénylméthane (MDI). On peut également ajouter de la poudre de caoutchouc obtenue avantageusement lors du ponçage d'un revêtement, pour réduire le coût du ragréage.

L'applicaion du ragréage se fait au peigne de 2 à 3 mm, suivant l'état de planimétrie du support et la finition au rouleau à picots peut permettre de terminer l'égalisation dans le cas d'un ragréage très chargé en poudre de caoutchouc.

Le séchage du ragréage dépend de la température et varie de 12 à 24 h. Si ce temps est dépassé, il faut effectuer une opération de ponçage pour assurer le collage du revêtement coulé.

On effectue le mélange de la résine polyhydroxylée, chargée et colorée, avec le durcisseur polyisocyanate de préférence de type MDI, puis on ajoute les petites formes dans le mélange.

La proportion avantageuse retenue est de 1:1 en poids entre la résine et les éléments de charge, et la dureté Shore de la résine est de préférence voisine de celle des formes en caoutchouc. Pour cela, on choisit une résine hydroxylée permettant d'obtenir cette caractéristique.

Le mélange résine/éléments de charge est appliqué sur le sol, à la lisseuse, en le répartissant sur une épaisseur de 6 mm. Une égalisation finale se fait au rouleau à picots pour permettre de répartir convenablement les éléments de charge dans la résine.

Après séchage, soit 12 à 24 h plus tard, suivant la température et l'hygrométrie ambiantes, on effectue un ponçage. Le ponçage est croisé pour permettre de compenser les défauts de planimétrie. On effectue un autre ponçage au grain 80 puis au grain 120.

Après aspiration de toutes les poussières dues au ponçage, on effectue suivant les besoins, un masticage avec une résine de même composition que la résine précédemment utilisée, mais solvatée par exemple au PMA pour boucher les quelques trous d'air encore présents.

Après séchage du mastic (quelques heures seulement si on accélère la polyaddition à l'aide d'ajout de didodécanoate de dibutyl-étain), on effectue un lustrage avec une ponceuse rotative munie d'un disque abrasif, au grain 120.

On applique ensuite au rouleau à poils mi-courts un vernis polyuréthane bi-composant à base d'un composant polyhydroxylé avec des agents de matage, des filres anti-UV et un polyisocyanate, de préférence aliphatique, pour éviter le jaunissement.

## Revendications

1. Revêtement de sol coulé, sans joint, comportant des éléments de charge décoratifs incrustés dans une résine, lesdits éléments de charge comprenant une surface ayant la forme souhaitée ou l'une des formes souhaitées pour le décor et ladite surface étant présentée à l'horizontale, caractérisé en ce que la plus grande dimension de ladite surface est supérieure à l'épaisseur de l'élément concerné et l'épaisseur des éléments de charge correspond sensiblement à celle du revêtement.

2. Revêtement selon la revendication 1, caractérisé en ce que les éléments de charge sont constitués de caoutchouc, matière plastique, résine époxy, polyméthacrylate ou bois.

3. Revêtement selon la revendication 1 ou 2, caractérisé en ce que l'épaisseur des éléments de charge est de 2 à 15 mm.

4. Revêtement selon l'une quelconque des revendications 1 à 3, caractérisé en ce que la résine est une résine polyuréthane, notamment bi-composant, époxy ou méthacrylate.

5. Revêtement selon l'une quelconque des revendications 1 à 4, caractérisé en ce que la résine a une dureté Shore voisine de celle de la matière de charge.

6. Procédé de réalisation du revêtement selon l'une quelconque des revendications 1 à 5, caractérisé en ce qu'il comprend les étapes consistant à :
a) préparer un mélange des constituants de la résine auquel on ajoute les éléments de charge, lesdits éléments comprenant une surface ayant la forme souhaitée ou l'une des formes souhaitées pour le décor, la plus grande dimension de ladite surface étant supérieure à l'épaisseur de l'élément ;
b) appliquer le mélange obtenu sur le sol à revêtir, avec une épaisseur sensiblement égale à celle des éléments de charge ;
c) égaliser pour répartir convenablement les éléments de charge dans la résine et assurer que lesdites surfaces des éléments sont présentées à l'horizontale ;
d) laisser sécher ; et
e) poncer, si nécessaire, pour compenser les défauts de planimétrie et faire réapparaître les éléments incrustés.

7. Procédé selon la revendication 6, caractérisé en ce que, si le support à revêtir présente un aspect poreux, il comporte les étapes supplémentaires, préliminaires, consistant à :
α) imprégner le support avec un prépolymère de type isocyanate solvaté dont le durcissement s'effectue par réaction des groupements isocyanate libre avec l'humidité de l'air ;
β) laisser sécher ;
γ) procéder à un ragréage au moyen d'une résine ; et
δ) laisser sécher pendant une durée adaptée au collage ultérieur de la couche de revêtement.

8. Procédé selon la revendication 6 ou 7, caractérisé en ce qu'il comporte les étapes finales consistant à :
a') aspirer les poussières dues au ponçage ;
β') effectuer, si nécessaire, un masticage supplémentaire avec la résine utilisée à l'étape b) mais solvatée, pour boucher les quelques trous d'air éventuellement présents ;
γ') laisser sécher ;
δ') effectuer un lustrage ; et
ε') appliquer un vernis compatible avec le matériau des éléments décoratifs et de la résine, additionné avantageusement d'au moins un agent de matage et/ou d'au moins un filtre anti-UV.

9. Procédé selon la revendication 8, caractérisé en ce que le vernis est constitué de polyuréthane bicomposant à base d'un composant polyhydroxylé et d'un polyisocyanate, de préférence aliphatique.

## Patentansprüche

1. Gegossener, nahtloser Fußbodenbelag, der in einem Harz inkrustierte dekorative Zusatzelemente enthält, wobei die Zusatzelemente eine Fläche der gewünschten Form oder einer der gewünschten Formen für die Dekoration umfassen, und die Fläche horizontal vorliegt, dadurch gekennzeichnet, daß die größere Dimension der Fläche größer ist als die Dicke des betreffenden Elementes und die Dicke der Zusatzelemente derjenigen des Belags genau entspricht.

2. Belag nach Anspruch 1, dadurch gekennzeichnet, daß die Zusatzelemente aus Kautschuk, Kunststoff, Epoxydharz, Polymethacrylat oder Holz gebildet sind.

3. Belag nach Anspruch 1 oder 2, dadurch gekennzeichnet, daß die Dicke der Zusatzelemente 2 bis 15 mm beträgt.

4. Belag nach einem der Ansprüche 1 bis 3, dadurch gekennzeichnet, daß das Harz ein Polyurethan-Harz, insbesondere ein Zweikomponentenharz, ein Epoxyd- oder ein Methacrylatharz ist.

5. Belag nach einem der Ansprüche 1 bis 4, dadurch gekennzeichnet, daß das Harz eine Shore-Härte aufweist, die der Härte des Materials der Zusatzelemente ähnlich ist.

6. Verfahren zur Herstellung des Belags nach einem der Ansprüche 1 bis 5, dadurch gekennzeichnet, daß es die folgenden Schritte umfaßt:
a) Zubereiten eines Gemisches der Bestandteile des Harzes, zu dem die Zusatzelemente zugefügt werden, wobei die Elemente eine Fläche der gewünschten Form oder einer der gewünschten Formen für die Dekoration umfassen, und die größere Dimension der Fläche größer ist als die Dicke des Elementes;
b) Auftragen des erhaltenen Gemisches auf den zu belegenden Boden in einer Dicke, die der Dicke der Elemente genau entspricht;
c) Ausgleichen, um die Elemente im Harz entsprechend zu verteilen und Sicherstellen, daß die Oberflächen der Elemente in der horizontalen Ebene vorliegen;
d) Trocknen lassen; und
e) gegebenenfalls Schleifen, um Planimetriefehier auszugleichen und die inkrustierten Elemente wieder sichtbar zu machen.

7. Verfahren nach Anspruch 6, dadurch gekennzeichnet, daß wenn der zu belegende Träger porös wirkt, es die folgenden zusätzlichen einleitenden Schritte umfaßt:
α) Imprägnieren des Trägers mit einem Präpolymer in Form eines solvatisierten Isocyanates, dessen Härten durch Reaktion der freien Isocyanatgruppen mit Luftfeuchtigkeit erfolgt;
β) Trocknen lassen;
γ) Verputzen mittels eines Harzes; und
δ) Trocknen lassen während einer dem nachträglichen Verleimen der Belagsschicht angepaßten Dauer.

8. Verfahren nach Anspruch 6 oder 7, dadurch gekennzeichnet, daß es die folgenden abschließenden Schritte umfaßt:
α') Absaugen des durch das Schleifen entstandenen Staubs;
β') gegebenenfalls Durchführen einer zusätzlichen Mastikation mittels des bei Schritt b) verwendeten, jedoch solvatisierten Harzes, um einige eventuell vorhandene Luftlöcher zu verschließen;
γ') Trocknen lassen;
δ') Lüstrieren; und
ε') Auftragen eines Firnisses, der mit dem Material der dekorativen Elemente und des Harzes kompatibel ist, unter vorteilhafter Zugabe mindestens eines Mattierungsmittels und/oder mindestens eines Anti-UV-Filters.

9. Verfahren nach Anspruch 8, dadurch gekennzeichnet, daß der Firnis aus einem Zweikomponenten-Polyurethan auf Basis einer polyhydroxylierten Komponente und eines vorzugsweise aliphatischen Polyisocyanates besteht.

## Claims

1. Cast floor covering, without a join, comprising added decorative elements inlaid in a resin, the said added elements having a surface of the shape, or of one of the shapes, desired for the decoration and the said surface being oriented horizontally, characterised in that the largest dimension of the said surface is greater than the thickness of the element concerned and the thickness of the added elements corresponds substantially to that of the covering.

2. Covering according to claim 1, characterised in that the added elements are composed of rubber, plastics material, epoxy resin, polymethacrylate or wood.

3. Covering according to claim 1 or 2, characterised in that the thickness of the added elements is from 2 to 15 mm.

4. Covering according to any one of claims 1 to 3, characterised in that the resin is a polyurethane resin, especially a two-component polyurethane resin, or an epoxy or methacrylate resin.

5. Covering according to any one of claims 1 to 4, characterised in that the resin has a Shore hardness close to that of the added material.

6. Method of producing the covering according to any one of claims 1 to 5, characterised in that it comprises the steps consisting of:
a) preparing a mixture of the constituents of the resin, into which the added elements are introduced, the said elements having a surface of the shape, or of one of the shapes, desired for the decoration, the largest dimension of the said surface being greater than the thickness of the element;
b) applying the mixture obtained onto the floor to be covered in a thickness substantially equal to that of the added elements;
c) evening out, for distributing the added elements suitably in the resin and ensuring that the said surfaces of the elements are oriented horizontally;
d) allowing to dry; and
e) sanding, if necessary, to compensate for faults in planarity and to re-expose the inlaid elements.

7. Method according to claim 6, characterised in that, if the support to be covered has a porous appearance, the method includes the additional preliminary steps consisting of:
α) impregnating the support with a prepolymer of an isocyanate type in association with a solvent, the hardening of which prepolymer is effected by reaction of the free isocyanate groups with atmospheric moisture;
β) allowing to dry;
γ) providing a finish by means of a resin; and
δ) allowing to dry for a period suited to the subsequent adhesion of the layer of covering.

8. Method according to claim 6 or 7, characterised in that it includes the final steps consisting of:
α') aspirating the dust due to the sanding;
β') carrying out, if necessary, an additional application of the resin used in step b) but in this case in association with a solvent, for closing the few air holes that may be present;
γ') allowing to dry;
δ') polishing; and
ε') applying a varnish compatible with the material of the decorative elements and of the resin, to which varnish there has advantageously been added at least one dulling agent and/or at least one anti-UV filter.

9. Method according to claim 8, characterised in that the varnish is composed of two-component polyurethane based on a polyhydroxylated component and a polyisocyanate, which is preferably aliphatic.
